# EUROPÄISCHE PATENTSCHRIFT

(11) **EP 0 894 753 B1**
(45) Veröffentlichungstag und Bekanntmachung des Hinweises auf die Patenterteilung: **12.12.2001**
(21) Anmeldenummer: 98113450.5
(22) Anmeldetag: 18.07.1998
(51) Int. Cl.: B65G 47/91

(54) **Vakuumsystem für ein Transfersystem**
Suction system for a transfer system
Système à vide pour un système de transfert

(30) Priorität: 25.07.1997 DE 19732056
(43) Veröffentlichungstag der Anmeldung: 03.02.1999
(73) Patentinhaber: Schuler Pressen GmbH & Co. KG, 73033 Göppingen (DE)
(72) Erfinder: Miklisch, Michael, 73037 Göppingen (DE); Cieslok, Günter, 73033 Göppingen (DE)

(56) Entgegenhaltungen:
- EP-A- 0 603 396
- US-A- 5 059 088
- US-A- 5 188 411
- US-A- 5 244 242
- US-A- 5 320 497

## Beschreibung

Die Erfindung betrifft ein Vakuumsystem, insbesondere für ein Transfersystem mit Vakuumgreifern, gemäß dem Oberbegriff des Anspruchs 1.

Transfersysteme, insbesondere Transfersysteme für Großteilpressen, in denen größere Blechteile in Pressenstationen einzulegen und aus diesen herauszuführen sind, weisen häufig Vakuumgreifer auf, mit denen die Blechteile zeitweilig festgehalten werden. Die Vakuumgreifer müssen mit Unterdruck versorgt werden, der in der Praxis meist durch als Strahlpumpen wirkende Venturidüsen bereitgestellt wird. Diese sind mit Druckluft betrieben, die einem Druckluftversorgungssystem entnommen wird. Sobald die Strahlpumpe mit als Treibmittel dienender Druckluft beaufschlagt wird, erzeugt sie an ihrem Sauganschluss ein Vakuum, das zu den Vakuumgreifern geleitet wird. Um das Vakuum ein- und auszuschalten, wird die zu den Strahlpumpen geführte Druckluft über eine entsprechende Ventileinrichtung ein- und ausgeschaltet. Die Ventileinrichtung ist von einer elektrischen Steuereinheit gesteuert, die mit einer entsprechenden Anzahl von Steuerleitungen mit der Ventileinrichtung verbunden ist.

Ein gattungsgemäßes Vakuumsystem ist bekannt aus der US 5 188 411. Dort wird ein Vakuumsystem offenbart, das vakuumbetätigte Haltemittel aufweist, die z.B. Windschutzscheiben von Automobilen festhalten und wieder loslassen. Das Festhalten der Windschutzscheibe erfolgt mittels Anlegen eines Unterdrucks an den vakuumbetätigten Haltemitteln, das Loslassen der Windschutzscheiben erfolgt mittels eines Druckstoßes.

Während die Strahlpumpe beim Aufbau des Vakuums größere Luftmengen aus den Vakuumgreifern und den angeschlossenen Leitungen entfernen muss, versperren die angesaugten und festgehaltenen Blechteile im weiteren den Luftzutritt, so dass das Vakuum lediglich aufrechterhalten aber kaum noch Luft gefördert werden muss. Die zum Betrieb der Strahlpumpen verwendete Druckluftmenge muss von dem Druckluftsystem des Transfersystems oder der Pressenanlage aufgebracht werden. Eine entsprechende Dimensionierung ist hier erforderlich, wobei naturgemäß ein geringer Druckluftverbrauch zu wünschen ist.

Daraus leitet sich die der Erfindung zugrundeliegende Aufgabe ab, ein Vakuumsystem zu schaffen, das einen möglichst geringen Druckluftverbrauch hat.

Diese Aufgabe wird durch das Vakuumsystem mit den Merkmalen des Patentanspruches 1 gelöst.

Bei dem erfindungsgemäßen Vakuumsystem bzw. dem entsprechenden Transfersystem wird das Vakuum mittels einer Strahlpumpe (Venturidüse) erzeugt. Die Strahlpumpe wird von einer Versorgungseinrichtung mit Druckluft versorgt, die letztlich von einer elektrischen Steuereinheit gesteuert ist. Die Versorgungseinrichtung enthält ein Ventilmittel, das die Druckluft zu der Strahlpumpe alternativ freigibt oder sperrt. Das Ventilmittel ist von der Steuereinrichtung gesteuert, die dazu mit entsprechenden Steuerleitungen mit dem Ventilmittel verbunden ist. Zu dem Ventilmittel gehören bspw. ein oder mehrere elektromagnetisch gesteuerte Vorsteuerventile, die pneumatisch ein Wegeventil betätigen.

Außerdem gehört zu der Versorgungseinrichtung ein der Strahlpumpe vorgeschaltetes Drosselmittel, dessen Drosselwirkung pneumatisch zwischen zwei vorgegebenen Niveaus umschaltbar ist. In einer Stellung weist das Drosselmittel keine oder allenfalls eine geringe Drosselwirkung auf, während es in seiner anderen Stellung eine erhebliche Drosselwirkung ausübt. In dieser Position wird der Druckluftzustrom zu der Strahlpumpe und somit der Druckluftverbrauch reduziert. Das Drosselmittel wird immer dann auf stärkere Drosselung des Druckluftstromes geschaltet, wenn die vakuumbetätigten Greifermittel das zu haltende Werkstück aufgenommen haben und das erforderliche Vakuum aufgebaut ist. In diesem Zustand genügt der von dem Drosselmittel zugelassene schwächere Druckluftstrom, um die Strahlpumpe mit einer geringeren Förderleistung zu betreiben, die zur Aufrechterhaltung des Vakuums genügt, wenn die Werkstücke die Saugöffnungen der Vakuumgreifermittel verschließen und somit den Nachstrom von Luft in das Vakuumsystem sperren.

Das Drosselmittel ist pneumatisch umschaltbar. Dies bedeutet, dass keine zusätzlichen elektrischen Steuerleitungen zu der übergeordneten elektrischen Steuereinheit geführt werden müssen. Konstruktive oder bauliche Veränderungen der Steuereinrichtung von Kabelbäumen oder dergleichen sind nicht erforderlich.

Zusätzlich zur Erzeugung von Vakuum für die vakuumbetätigten Greifermittel kann es erforderlich sein, diese zeitweilig mit Druckluft zu beaufschlagen. Auf diese Weise kann das die Werkstücke an den Greifermitteln haltende Vakuum zum Ablegen der Werkstücke schnell abgebaut werden. Darüber hinaus können die Werkstücke durch kurzzeitigen Überdruck an den Greifermitteln abgeworfen werden. Dazu enthält die Versorgungseinrichtung ein Ventilmittel, durch das das Greifermittel mit Druckluft beaufschlagbar ist.

Das Ventilmittel weist dazu vorzugsweise drei Schaltpositionen auf. Während die erste und die zweite Schaltposition des Ventilmittels zum Sperren bzw. Freigeben der Druckluft zu der Strahlpumpe dienen, werden die Greifermittel in der dritten Schaltposition mit Druckluft beaufschlagt.

Dazu ist das Ventilmittel vorzugsweise als Fünf/Drei-Wegeventil ausgebildet, das von der elektrischen Steuereinheit betätigt ist. Dies kann direkt, bspw. durch Magnetspulen, oder pneumatisch erfolgen. Dazu dienen Vorsteuereingänge, denen über elektromagnetisch betätigte Vorsteuerventile Drucksignale zugeführt werden. Zur Festlegung der drei Schaltpositionen des Ventilmittels (Wegeventiles) genügen zwei elektrische Steuerleitungen, wobei das Wegeventil bspw. seine Sperrposition einnimmt, wenn beide Steuerleitungen kein Signal führen. Seine Position, in der die Strahlpumpe maximal mit Druckluft versorgt wird, wird bspw. eingenommen, wenn eine der Steuerleitungen Signal führt, während die Position zur Druckbeaufschlagung der Greifermittel (Abwerfen der Werkstücke) eingenommen wird, wenn die andere Steuerleitung Signal führt.

Die zusätzliche Einführung des Luftsparzustandes wird durch ein Rastmittel möglich, das das Wegeventil, wenn es einmal in Saugposition überführt worden ist, auch dann in dieser Stellung hält, wenn das entsprechende Ansteuersignal wegfällt. Das Wegfallen dieses Ansteuersignals kann direkt oder indirekt zur Abschaltung des Drosselmittels genutzt werden.

Um das Wegeventil aus dem Verrast-Zustand in seinen im Prozessablauf nächstfolgenden Zustand zu überführen, erhält es über die Steuerleitungen bzw. den entsprechenden Vordruckanschluss einen Abwerfimpuls, der es umschaltet.

Das Drosselmittel kann auch von dem erzeugten Vakuum gesteuert werden, wobei es immer dann auf erhöhte Drosselung umschaltet, wenn ein ausreichendes Vakuum aufgebaut ist. Dies hat den Vorteil, dass die Drosselung der Druckluftzufuhr gewissermaßen geregelt erfolgt. Wird bspw. durch eine Leckage im Vakuumsystem oder ein schlecht sitzendes Greifermittel ein Eindringen von Umgebungsluft in das Vakuumsystem möglich, schaltet das Drosselmittel bei entsprechender Festlegung eines Schwellwertes nicht mehr um, wodurch zwar die Druckluft nicht gedrosselt und somit mehr Druckluft verbraucht wird, wobei jedoch die Greifwirkung der Greifermittel erhalten bleibt.

Bei einer besonders vorteilhaften Ausführungsform der Erfindung ist das Drosselmittel in einer Zwischenplatte zwischen dem Ventilgehäuse des als Wegeventil ausgebildeten Ventilmittels und seiner Anschlussplatte angeordnet. Zur Steuerung des Drosselmittels ist von einem Vorsteueranschluss des Wegeventiles ein Kanal zu dem Drosselmittel geführt. Dieser kann sowohl als äußerer Kanal als auch in Form einer das Ventilgehäuse durchsetzenden Bohrung ausgebildet sein. In jedem Fall kann damit die Luftsparschaltung durch einfaches Einfügen der Zwischenplatte in die Ventilanordnung integriert werden, ohne dass sonstige bauliche Änderungen an dem Vakuumsystem erforderlich werden würden. Es sind weder zusätzliche elektrische noch zusätzliche, über größere Entfernungen zu führende Pneumatikleitungen, sondern lediglich zwei Zwischenstücke oder -platten und eine kurze Leitung an dem Wegeventil erforderlich.

In der Zeichnung ist ein Ausführungsbeispiel der Erfindung dargestellt. Es zeigen:
- Fig. 1: einen pneumatischen Übersichtsplan eines Vakuumsystems, in Prinzipdarstellung,
- Fig. 2: eine vereinfachte Darstellung des zu dem Vakuumsystem nach Fig. 1 gehörigen Wegeventiles mit einem pneumatisch gesteuerten Drosselmittel, in schematisierter Schnittdarstellung, in Grundstellung,
- Fig. 3: eine vereinfachte Darstellung des zu dem Vakuumsystem nach Fig. 1 gehörigen Wegeventiles mit einem pneumatisch gesteuerten Drosselmittel, in schematisierter Schnittdarstellung, in Saugstellung,
- Fig. 4: eine vereinfachte Darstellung des zu dem Vakuumsystem nach Fig. 1 gehörigen Wegeventiles mit einem pneumatisch gesteuerten Drosselmittel, in schematisierter Schnittdarstellung, in reduzierter Saugstellung,
- Fig. 5: eine vereinfachte Darstellung des zu dem Vakuumsystem nach Fig. 1 gehörigen Wegeventiles mit einem pneumatisch gesteuerten Drosselmittel, in schematisierter Schnittdarstellung, in Abwurfstellung,
- Fig. 6: ein Ansteuerschema für das Wegeventil nach Fig. 1 bis 5, und
- Fig. 7: eine alternative Ausführungsform eines Vakuumsystemes mit Luftsparschaltung, in schematisierter Prinzipdarstellung.

### Beschreibung

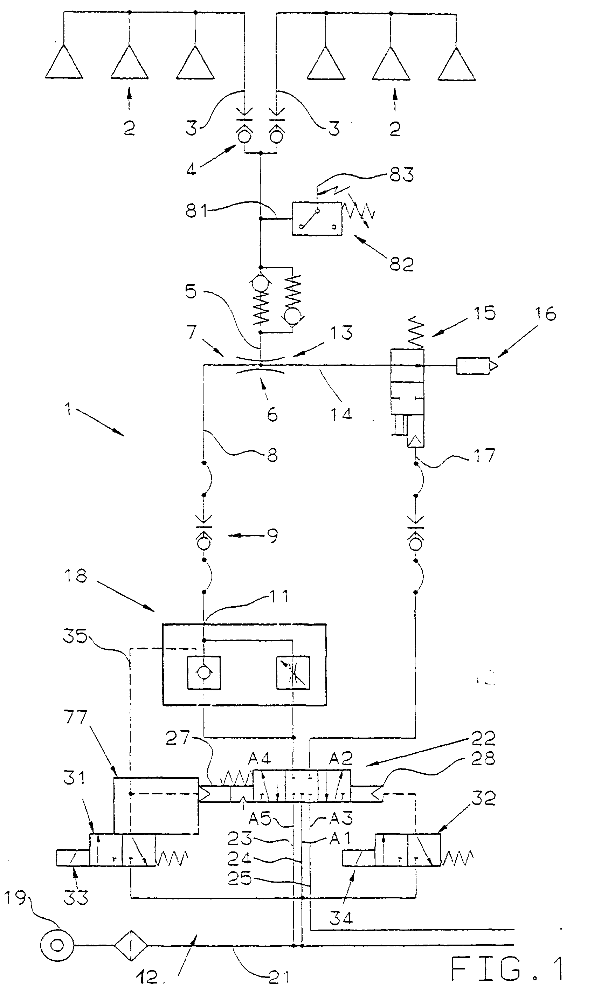

In Fig. 1 ist ein zu einem nicht weiter veranschaulichten Transfersystem gehöriges Vakuumsystem 1 veranschaulicht, das dazu dient, Vakuumsauger 2 gesteuert mit Vakuum zu versorgen. Die Vakuumsauger 2 sind als Saugtassen oder vergleichbare Saugelemente ausgebildet und an dem Transfersystem bspw. an Saugertraversen befestigt. Sie dienen dazu, flächenhafte Werkstücke, bspw. Platinen (Blechtafeln), zu halten, wenn sie mit Vakuum beaufschlagt sind, bzw. freizugeben, wenn das Vakuum abgebaut wird.

Die Vakuumsauger 2 sind über Leitungen 3 und ggf. Kupplungsmittel 4 mit einem Sauganschluss 5 einer Strahlpumpe 6 verbunden, die mit Druckluft betrieben wird. Die Strahlpumpe 6 weist dazu einen Treibmittelanschluss 7 auf, der über eine Leitung 8, in der Kupplungsmittel 9 angeordnet sein können, mit einem Anschluss 11 einer Ventilanordnung 12 in Verbindung steht. Die Strahlpumpe 6 weist außerdem einen Ausgangsanschluss 13 auf, der über eine Leitung 14 und ein 2/2-Wegeventil 15 zu einem Auslass 16 geführt ist. Das 2/2-Wegeventil ist über eine Leitung 17 pneumatisch gesteuert, die an einem Anschluss A₂ der Ventilanordnung 12 angeschlossen ist. Die Ventilanordnung 12 dient dazu, wahlweise die Leitung 17 und/oder die Leitung 8 mit Druckluft zu beaufschlagen, wobei die Leitung 8 mit unterschiedlichen Quellstärken beaufschlagbar ist. Dazu dient ein dem Anschluss 11 vorgeschaltetes variables Drosselmittel 18. Die Ventilanordnung 12 verbindet das Vakuumsystem 1 mit einer Druckluftquelle 19 und einer entsprechenden Verteilungsleitung 21.

Die Ventilanordnung 12 enthält als zentrales Element ein 5/3-Wegeventil 22, das pneumatisch gesteuert ist. Mit seinem Ausgangsanschluss A₄ ist das 5/3-Wegeventil 22 mit dem Drosselmittel 18 verbunden. Zu der Verteilerleitung 21 führen zwei von seinen Anschlüssen A₅ und A₁ ausgehende Leitungen 23, 24. Eine drucklose Entlüftungsleitung 25 führt zu einem weiteren Anschluss A₃ des 5/3-Wegeventils 22.

Das Fünf/Drei-Wegeventil 22 ist über zwei Pneumatikzylinder 27, 28 gesteuert, die über Pilotventile 31, 32 durch Vorsteuerdruck betätigt werden. Diese sind über entsprechende Magnetspulen 33, 34 elektrisch angesteuert. Das Pilotventil 31 steuert über eine Steuerleitung 35 das Drosselmittel 18 pneumatisch, indem das Drosselmittel 18 auf ungehinderten Durchgang schaltet, wenn die Steuerleitung 35 Druck führt.

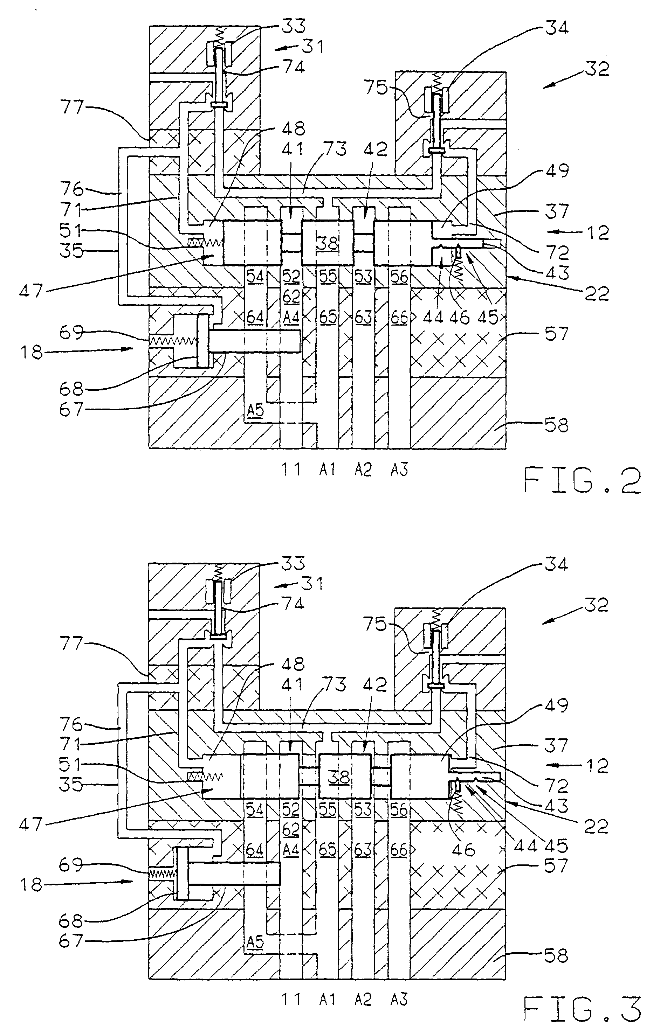

Der Aufbau der Ventilanordnung 12, der Drosseleinrichtung 18 und der Vorsteuer- oder Pilotventile 31, 32 ist der schematischen Darstellung in Fig. 2 (sowie den Fig. 3, 4, und 5) zu entnehmen. Das 5/3-Wegeventil 22 weist einen Ventilkörper 37 auf, in dem ein rotationssymmetrisch ausgebildeter Kolbenschieber 38 axial verschiebbar gelagert ist. Der Kolbenschieber 38 weist, ausgehend von einer zylindrischen Grundform, zwei im Abstand parallel zueinander angeordnete Umfangsnuten 41, 42 mit jeweils etwa rechteckigem Querschnitt auf. Stirnseitig ist der Kolbenschieber 38 mit einem Fortsatz 43 versehen, der zwei voneinander beabstandete Rastausnehmungen 44, 45 aufweist. Diesen ist eine federnd gelagerte Rastnase 46 zugeordnet, die in dem Grundkörper 37 radial zu dem Fortsatz 43 beweglich gelagert ist.

Der Kolbenschieber 38 sitzt im Übrigen in einer zylindrischen Kammer 47, die beidenends verschlossen ist. Somit definieren die axialen Stirnflächen des Kolbenschiebers 38 mit der Kammer 47 zwei Zylindervolumina 48, 49, die als Pneumatikzylinder 27, 28 (Fig. 1) zum Antrieb des Kolbenschiebers 38 dienen. Mittels einer Feder 51 ist der Kolbenschieber 38 auf seine Mittellage zu vorgespannt.

An der Kammer 47 sind ringförmige, sich radial nach außen erweiternde Abschnitte 52, 53 ausgebildet, die den Ringnuten 41, 42 des Kolbenschiebers 38 in Mittelstellung zugeordnet sind und die mit den Ausgangsanschlüssen A₄ bzw. A₂ kommunizieren. Dem Abschnitt 52 benachbart, sind zwei weitere, sich ringförmig nach außen erweiternde Abschnitte 54, 55 der Kammer 47 angeordnet, die mit den Eingangsanschlüssen A₁ und A₅ kommunizieren. Der Abschnitt 55 liegt zwischen den Abschnitten 52 und 53. Letzterem ist an seiner anderen Seite 1 ein ebenfalls ringförmiger, sich radial nach außen erweiternder Abschnitt 56 benachbart, der mit dem Anschluss A₃ kommuniziert.

Zur Verbindung der Kammerabschnitte 52 bis 56 mit den Anschlüssen A₁ bis A₅ dienen eine Zwischenplatte 57 und eine Anschlussplatte 58, die entsprechende Kanäle 62 bis 66 aufweisen. Die Zwischenplatte 57 weist an ihrer dem Grundkörper 37 zugewandten Planseite ein Öffnungs- oder Lochmuster auf, das mit dem Lochmuster an der der Anschlussplatte 58 zugewandten Planseite übereinstimmt. Sie kann nachträglich in eine Ventilanordnung 12 eingebaut werden, die ansonsten ohne Zwischenplatte 57 mit direkter Verbindung zwischen dem Grundkörper 37 und der Anschlussplatte 58 ausgebildet ist. Die Zwischenplatte 57 ist demnach nachrüstbar.

Der die Zwischenplatte 57 durchsetzende Kanal 62 ist willkürlich drosselbar. Dazu dient ein in den Kanal 62 ragender Stößel 67, dessen von dem Kanal 62 abliegendes Ende mit einem Pneumatikkolben 68 verbunden ist. Der Stößel 67 ist mittels einer Druckfeder 69 auf seine vorgeschobene Position hin vorgespannt, in der er maximal weit in den Kanal 62 ragt und lediglich einen engen Durchlass freilässt.

Zur Betätigung des 5/3-Wegeventiles durch axiales Verschieben des Kolbenschiebers 38 dienen die beiden Pilotventile 31, 32, die über Steuerkanäle 71, 72 mit dem Arbeitsvolumina 48, 49 verbunden sind. Druckluft erhalten die Pilotventile 31, 32 über einen Kanal 73, der über den Abschnitt 55 und den Kanal 65 mit dem Anschluss A₁ in Verbindung steht. Die Pilotventile 31, 32 sind Sitzventile, deren Ventilverschlussglied 74, 75 federnd auf eine Stellung zu vorgespannt ist, in der der Kanal 73 jeweils verschlossen und die Kanäle 71, 72 nach außen entlüftet sind. Werden die Pilotventile 31, 32 angesteuert, wird eine nach außen dichte Verbindung zwischen dem Kanal 73 und den Kanälen 71 bzw. 72 hergestellt.

Die Steuerleitung 35 bildet einen zusätzlichen Kanal 76, der zur Betätigung des Drosselmittels 18 dient. Die Steuerleitung 35 ist von dem Kanal 71 zu dem Pneumatikkolben 78 derart geführt, dass Druckbeaufschlagung des Pneumatikkolbens 68 den Stößel 67 gegen die Kraft der Druckfeder 69 aus dem Kanal 62 herausführt. Zur Anzapfung des Kanals 71 dient ein Zwischenstück 77, das zwischen das Pilotventil 31 und dem Grundkörper 37 eingefügt ist und an der dem Pilotventil 31 zugewandten Flachseite ein Lochmuster aufweist, das mit dem Lochmuster an der Gegenseite übereinstimmt. Von dem Zwischenstück 77 führt eine Rohrleitung mit dem Kanal 76 zu der Zwischenplatte 57. Alternativ kann auch eine Verbindungsbohrung zwischen dem Kanal 71 bzw. dem Arbeitsvolumen 48 und dem entsprechenden Arbeitsvolumen des Pneumatikkolbens 68 vorgesehen sein. Die Zwischenplatte 77 ist ohne konstruktive Änderung des 5/3-Wegeventils 22 nachrüstbar.

Die Leitung 3 ist (siehe Fig. 1) über einen Abzweig 81 mit einem Druckfühler 82 verbunden, der an einer Leitung 83 ein elektrisches Signal abgibt, wenn ein festgelegter Unterdruck erreicht oder unterschritten ist. Ist der Druck größer als der festgelegte Unterdruck, wird an der Leitung 83 kein oder ein anderes Signal abgegeben.

Das insoweit beschriebene Vakuumsystem arbeitet wie folgt:

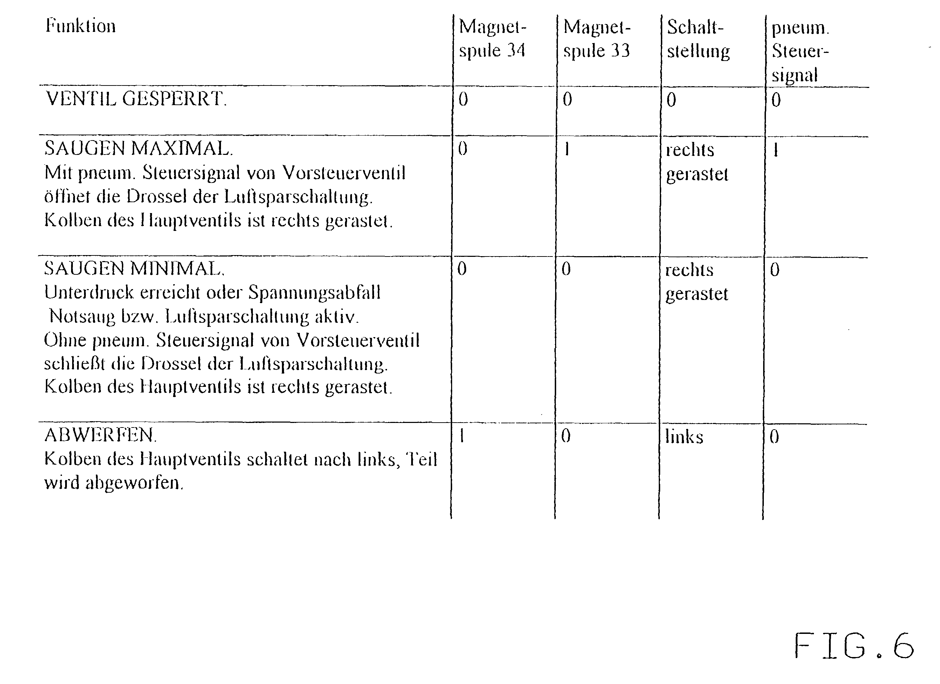

In der in Fig. 2 veranschaulichten Grundstellung der Ventilanordnung 12 befindet sich der Kolbenschieber 38 in Mittelposition und weder der Ausgang A₄ noch der Ausgang A₂ erhalten Druckluft von der Quelle 19. Dieser Zustand ist in der in Fig. 6 angegebenen Tabelle in der ersten Zeile mit "Ventil gesperrt" wiedergegeben. Weder die Leitung 8 noch die Leitung 17 (Fig. 1) führen Druckluft, so dass die Vakuumsauger 2 weder Teile halten noch abwerfen. Sie sind inaktiv.

Um mit den Vakuumsaugern 2 ein Werkstück ansaugen und festhalten zu können, wird die Magnetspule 33 des Pilotventils 31 angesteuert, so dass das Ventilverschlussglied 74 aus seiner in Fig. 2 dargestellten Stellung in seine in Fig. 3 dargestellte Stellung übergeht. Dies entspricht in der Tabelle nach Fig. 6 der zweiten Zeile. In diesem in Fig. 3 veranschaulichten Zustand der Ventilanordnung 12 ist das Arbeitsvolumen 48 über die Kanäle 65, 73, 71 druckbeaufschlagt, so dass der Kolbenschieber 38 in eine in Fig. 3 rechte Position überführt wird. In dieser sind die Anschlüsse A₁, A₄ sowie die Anschlüsse A₃ und A₂ miteinander verbunden. Dadurch ist die Leitung 8 (Fig. 1) mit Druckluft beaufschlagt und die Leitung 17 druckfrei. Über den Kanal 76 (Fig. 3) ist der Pneumatikkolben 68 druckbeaufschlagt, so dass der Stößel 67 den vollen Durchlass des Kanals 62 freigibt. Die über die Leitung 8 zu der Strahlpumpe 6 gelangende Druckluft durchströmt die Strahlpumpe 6 und gelangt über die Leitung 14 und das 2/2-Wegeventil 15 ins Freie. Dieses ist infolge der Druckfreiheit der Leitung 17 auf Durchgang geschaltet. Die Strahlpumpe 6 erzeugt damit an ihrem Sauganschluss 5 einen Unterdruck und fördert Luft mit hoher Förderleistung über die Leitungen 3 aus den Vakuumsaugern 2. Damit wird das zum Festhalten von Teilen an den Vakuumsaugern 2 erforderliche Vakuum erzeugt.

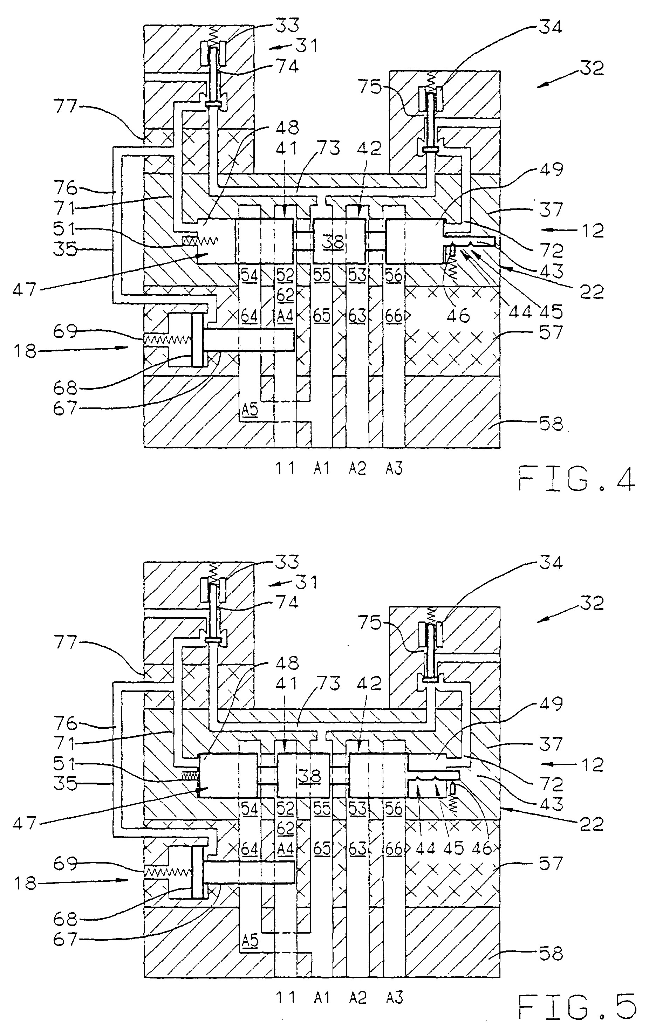

Ist ein Werkstück von den Vakuumsaugern 2 angesaugt, kann keine oder nahezu keine Außenluft in die Leitungen 3 und somit das Vakuumsystem 1 nachströmen. Es baut sich dadurch ein Vakuum auf, das alsbald den an dem Druckfühler 82 eingestellten Schwellwert unterschreitet. Der Druckfühler 82 gibt somit an der Leitung 83 ein elektrisches Signal ab, das einer übergeordneten Steuerung zur Ansteuerung der Magnetspulen 33, 34 signalisiert, dass der Vakuumsollwert erreicht ist. Die Steuerung schaltet nun die Magnetspule 33 ab, wodurch das Pilotventil 31 wieder schließt (Fig. 4). Dadurch werden das Arbeitsvolumen 48 und über den Kanal 76 das von den Pneumatikkolben 68 definierte Arbeitsvolumen drucklos. Während der Kolbenschieber 38 durch das Rastelement 46 in seiner am weitesten nach rechts verschobenen Position verrastet bleibt, kehrt der Stößel 67, getrieben von der Druckfeder 69, in seine Ruheposition zurück, in der er den Kanal 62 bis auf einen geringen Durchlass schließt und somit drosselt. Somit gelangt die Druckluft nur noch gedrosselt über die Leitung 8 zu der Strahlpumpe 6, die somit mit verringerter Leistung arbeitet. Der Druckluftverbrauch ist merklich verringert, wobei die geringere Saugleistung der Strahlpumpe 6 dazu ausreicht, das Vakuum in den Leitungen 3 und somit an den Vakuumsaugern 2 aufrechtzuerhalten.

Sollte infolge eines Lecks oder unsicheren Sitzes eines Vakuumsaugers 2 das Vakuum in dem System schwächer werden als vorgesehen, wird dies mit dem Druckfühler 82 erfasst, der dann umschaltet, woraufhin die übergeordnete Steuerung durch Ansteuerung des Pilotventils 31 wieder auf Saugen mit voller Förderleistung schaltet (wie in Fig. 3 dargestellt).

Soll ein von den Vakuumsaugern 2 gehaltenes Teil abgelegt (abgeworfen) werden, wird gemäß der in Fig. 6 angegebenen Tabelle bei stromloser Magnetspule 33 die Magnetspule 34 angesteuert, so dass, wie in Fig. 5 dargestellt, der Kanal 73 mit dem Kanal 72 verbunden wird. Es wird dadurch das Arbeitsvolumen 49 druckbeaufschlagt, während das Arbeitsvolumen 48 druckentlastet ist. Mit dieser Maßnahme werden die Kanäle 65 und 63 und somit die Anschlüsse A₁ und A₂ miteinander verbunden. Der Anschluss A₄ erhält über den Kanal 64 von dem Kanal 65 her ebenfalls eine Verbindung zu dem Anschluss A₁, die allerdings durch den Stößel 67 gedrosselt ist. Die somit erfolgende Druckbeaufschlagung der Leitung 17, die bislang drucklos war, führt zum Umschalten des 2/2-Wegeventils 15, das damit die Leitung 14 absperrt. Die Strahlpumpe 6 kann nun nicht mehr als Strahlpumpe arbeiten und die über den Anschluss A₄ und die Drossel zu dem Anschluss 11 strömende Druckluft gelangt über die lediglich noch als Verbindung wirkende Strahlpumpe 6 zu den Vakuumsaugern 2. Die führt damit zum sehr schnellen Abbau des vorhandenen Vakuums und ggf. auch zum Aufbau eines leichten Überdrucks, wodurch gehaltene Teile sofort abgeworfen werden.

Werden beide Magnetspulen 33, 34 stromlos, kehrt die Ventilanordnung 12 in ihre in Fig. 2 veranschaulichte Ausgangsposition zurück.

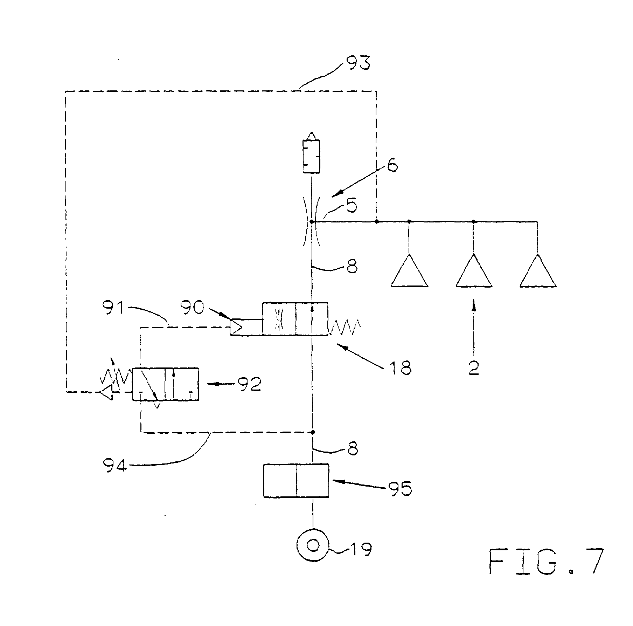

In Fig. 7 ist eine vereinfachte Ausführungsform der Erfindung veranschaulicht. Die Vakuumsauger 2 werden ebenfalls über eine Strahlpumpe 6 mit Unterdruck versorgt. Die Strahlpumpe 6 erhält die zum Betrieb erforderliche Druckluft über die Leitung 8 von der Druckluftquelle 19 her. In der Leitung 8 ist ein umschaltbares Drosselmittel 18 angeordnet. Dieses ist durch Federvorspannung auf eine Stellung hin vorgespannt, in der es Druckluft nahezu ungehindert durchströmen lässt. Das umschaltbare Drosselmittel ist mittels eines Pneumatikzylinders 90 in eine Stellung umschaltbar, in der es den Druckluftdurchtritt drosselt. Der Pneumatikzylinder 90 ist über eine Steuerleitung 91 an ein 3/2-Wegeventil 92 angeschlossen, das vakuumbetätigt ist. Dazu dient eine mit den Vakuumsaugern 2 in Verbindung stehende Saugleitung 93. Das 2/2-Wegeventil ist ein federvorgespanntes Ventil, das so ausgebildet ist, dass es eine mit der Druckluftquelle 19 in Verbindung stehende Leitung 94 entlüftet, wenn das über die Saugleitung 93 anliegende Vakuum seinen Sollwert noch nicht erreicht hat. Ist der Sollwert jedoch erreicht oder der anliegende Druck noch geringer als gefordert, schaltet das als Druckfühler arbeitende 3/2-Wegeventil um, so dass die Leitung 94 mit der Steuerleitung 91 verbunden wird. Dadurch wird das Drosselmittel 18 von vollem Durchlass auf gedrosselten Durchlass geschaltet. Der gedrosselte Druckluftstrom über die Leitung 8 zu der Strahlpumpe 6 genügt, um ein einmal aufgebautes Vakuum an dem Vakuumsauger 2 aufrechtzuerhalten. Der Druckluftverbrauch wird jedoch signifikant gemindert. Außerdem sind keine zusätzlichen Steuermittel erforderlich. Die Betätigung der Vakuumsauger 2 kann mit einem einfachen Ventil 95 erfolgen, das zwischen die Druckluftquelle 19 und die Versorgungsleitung 8, 8' geschaltet ist. Zusätzlicher Regel- oder Steueraufwand, insbesondere Eingriffe an vorhandenen Steuerungen, ist nicht erforderlich.

Bricht das Vakuum infolge einer Leckage oder eines Fehlers zusammen, schalten das 3/2-Wegeventil 92 und das Drosselmittel 18 zurück, wodurch die Strahlpumpe 6 wiederum ihre volle Saugleistung erhält.

Ein Vakuumsystem, insbesondere für Vakuumgreifer, weist eine Strahlpumpe 6 zur Vakuumerzeugung auf, die, wenn das erforderliche Vakuum aufgebaut ist, mit einem gedrosselten Druckluftstrom versorgt wird. Zur Drosselung des Druckluftstromes dient ein gesteuertes Drosselmittel 18, das in Abhängigkeit von dem erfassten Vakuumwert den Druckluftstrom zu der Strahlpumpe 6 drosselt, wenn der Vakuumsollwert erreicht oder übertroffen ist.

## Patentansprüche

1. Vakuumsystem (1), insbesondere für Vakuumgreifer eines Transfersystems als Haltemittel, mit einer Pumpeinrichtung (6), die bei Druckluftbeaufschlagung an einem Treibmittelanschluß (7) eine von der Druckluftbeaufschlagung abhängige Saugwirkung an einem Sauganschluß (5) erzeugt,
mit wenigstens einem vakuumbetätigten Haltemittel (2), das mit dem Sauganschluß (5) der Pumpeinrichtung (6) verbunden ist, und
mit einer Versorgungseinrichtung (12), die an den Treibmittelanschluß (7) der Pumpeinrichtung (6) angeschlossen ist und über die die Pumpeinrichtung (6) mit Druckluft beaufschlagbar ist,
wobei die Versorgungseinrichtung (12) ein Ventilmittel (22) enthält, durch das die zu der Pumpeinrichtung (6) zu führende Druckluft gesteuert freigeb- und sperrbar ist,
**dadurch gekennzeichnet, daß** die Versorgungseinrichtung (12) ein dem Treibmittelanschluß (7) der Pumpeinrichtung (6) vorgeschaltetes steuerbares Drosselmittel (18) zur Umschaltung der Saugwirkung der Pumpeinrichtung (6) wenigstens zwischen zwei unterschiedlichen Saugniveaus enthält,
wobei die Drosselwirkung des Drosselmittels (18) gesteuert wenigstens zwischen zwei vorgegebenen Niveaus umschaltbar ist, indem in einer Drosselposition der Druckluftdurchströmung durch einen verengten Strömungsquerschnitt ein Widerstand entgegengesetzt wird und
daß das Drosselmittel (18) von dem von der Pumpeinrichtung (6) erzeugten Vakuum derart gesteuert ist, daß das Drosselmittel (18) eine höhere Drosselwirkung aufweist, wenn an dem Haltemittel (2) ein festgelegter Druckwert unterschritten ist, und daß das Drosselmittel (18) eine niedrigere Drosselwirkung aufweist, wenn an dem Haltemittel (2) ein festgelegter Druckwert überschritten ist.

2. Vakuumsystem nach Anspruch 1, **dadurch gekennzeichnet, daß** die Versorgungseinrichtung (12) ein Ventilmittel (22) enthält, durch das die zu der Pumpeinrichtung (6) zu führende Druckluft gesteuert freigeb- und sperrbar ist.

3. Vakuumsystem nach Anspruch 1, **dadurch gekennzeichnet, daß** die Versorgungseinrichtung (12) ein Ventilmittel (22) enthält, durch das das vakuumbetätigte Haltemittel (2) gesteuert mit Druckluft beaufschlagbar ist.

4. Vakuumsystem nach Anspruch 2 oder 3, **dadurch gekennzeichnet, daß** das Ventilmittel (22) wenigstens eine erste Schaltposition, in der die Druckluft zu der Pumpeinrichtung (6) freigegeben ist, eine zweite Schaltposition, in der die Druckluft zu der Pumpeinrichtung (6) gesperrt ist, und eine dritte Schaltposition aufweist, in der die Pumpeinrichtung (6) inaktiv geschaltet ist.

5. Vakuumsystem nach Anspruch 2 oder 3, **dadurch gekennzeichnet,**
**daß** das Ventilmittel (22) ein 5/3-Wegeventil ist, dessen in drei unterschiedliche Schaltpositionen überführbares Steuerglied (38) federnd auf seine Sperrposition hin vorgespannt ist, in der die Druckluftzufuhr zu der Pumpeinrichtung (6) gesperrt ist, und
**daß** das 5/3-Wegeventil zwei Vorsteuereingänge aufweist, bei deren alternativer Druckbeaufschlagung das Steuerglied (38) aus seiner Sperrposition heraus in jeweils einer der beiden anderen Schaltpositionen überführbar ist, die eine Saugposition mit Druckbeaufschlagung der Pumpeinrichtung (6) und eine Auswerfposition sind, in der die Pumpeinrichtung (6) inaktiv und das Haltemittel (2) druckbeaufschlagt ist.

6. Vakuumsystem nach Anspruch 5, **dadurch gekennzeichnet, daß** das 5/3-Wegeventil ein Rastmittel (44, 46) enthält, das daß Steuerglied (38) auch bei Wegfall des entsprechenden Vorsteuerdrucks in der Schaltposition verrastet, in der die Pumpeinrichtung (6) mit Druckluft versorgt wird.

7. Vakuumsystem nach Anspruch 2 oder 3, **dadurch gekennzeichnet, daß** das Drosselmittel (18) in einer von dem Ventilmittel (22) zu der Strahlpumpe (6) führenden Leitung angeordnet ist und eine Freigabeposition, in der die Druckluft im Wesentlichen ungehindert durchgelassen wird, sowie eine Drosselposilion aufweist, in der der Druckluftdurchströmung durch einen verengten Strömungsquerschnitt ein Widerstand entgegengesetzt wird.

8. Vakuumsystem nach einem der Ansprüche 5 oder 6, **dadurch gekennzeichnet daß** das Drosselmittel (18) von einem Vorsteuerdruck derart gesteuert ist, daß das Drosselmittel (18) aus seiner Durchlaßstellung in seine Drosselstellung schaltet, wenn der Vorsteuerdruck wegfällt.

9. Vakuumsystem nach Anspruch 5, **dadurch gekennzeichnet,**
**daß** das 5/3-Wegeventil ein Ventilgehäuse (38) aufweist, an dessen Vorsteueranschlüsse (71, 72) gegebenenfalls über Zwischenstücke (77) Vorsteuerventile (31, 32) befestigt sind,
**daß** das Drosselmittel (18) in einer Zwischenplatte (57) angeordnet ist, die zwischen dem Ventilgehäuse (37) und einer Anschlußplatte (58) angeordnet ist und die einen Steueranschluß (76) für das Drosselmittel (18) aufweist, und
**daß** der Vorsteueranschluß (71), bei dessen Druckbeaufschlagung das 5/3 Wegeventil in Saugposition überführt wird, mit dem Steueranschluß (76) des Drosselmittels (18) verbunden ist.

10. Transfersystem mit einem Vakuumsystem nach einem oder mehreren der Ansprüche 1 bis 12.

## Claims

1. Vacuum system (1), in particular for vacuum grippers of a transfer system as holding means, with a pumping device (6) which, when loaded with compressed air at a propellant connection (7) generates at a suction connection (5) a suction action dependent on the compressed-air load,
with at least one vacuum-actuated holding means (2) which is connected to the suction connection (5) of the pumping device (6), and
with a supply device (12) which is connected to the propellant connection (7) of the pumping device (6) and via which the pumping device (6) can be loaded with compressed air,
with the supply device (12) containing a valve means (22), by which the compressed air to be guided to the pumping device (6) can be released and shut off in a controlled manner,
**characterized in that** the supply device (12) contains a controllable throttle means (18), preceding the propellant connection (7) of the pumping device (6), for changing over the suction action of the pumping device (6) at least between two different suction levels,
the throttle action of the throttle means (18) being capable of being changed over in a controlled manner at least between two predetermined levels, **in that**, in a throttle position, resistance is opposed to the compressed-air throughflow by a narrowed flow cross section, and
**in that** the throttle means (18) is controlled by the vacuum generated by the pumping device (6), in such a way that the throttle means (18) has a higher throttle action when the pressure on the holding means (2) falls below a fixed pressure value,
and **in that** the throttle means (18) has a lower throttle action when the pressure on the holding means (2) exceeds a fixed pressure value.

2. Vacuum system according to Claim 1, **characterized in that** the supply device (12) contains a valve means (22), by which the compressed air to be guided to the pumping device (6) can be released and shut off in a controlled manner.

3. Vacuum system according to Claim 1, **characterized in that** the supply device (12) contains a valve means (22), by which the vacuum-actuated holding means (2) can be loaded with compressed air in a controlled manner.

4. Vacuum system according to Claim 2 or 3, **characterized in that** the valve means (22) has at least a first switching position, in which the compressed air is released to the pumping device (6), a second switching position, in which the compressed air is shut off to the pumping device (6), and a third switching position, in which the pumping device (6) is switched to inactive.

5. Vacuum system according to Claim 2 or 3, **characterized**
**in that** the valve means (22) is a 5/3-way valve, of which the control member (38) which is capable of being transferred into three different switching positions is prestressed resiliently towards its shut-off position, in which the supply of compressed air to the pumping device (6) is shut off, and
**in that** the 5/3-way valve has two pilot-control inlets, during the alternative pressure loading of which the control member (38) can be transferred out of its shut-off position in each case into one of the other two switching positions which are a suction position with the pressure loading of the pumping device (6) and an ejection position in which the pumping device (6) is inactive and the holding means (2) is pressure-loaded.

6. Vacuum system according to Claim 5, **characterized in that** the 5/3-way valve contains a locking means (44, 46) which, even when the corresponding pilot-control pressure lapses, locks the control member (38) in the switching position in which the pumping device (6) is supplied with compressed air.

7. Vacuum system according to Claim 2 or 3, **characterized in that** the throttle means (18) is arranged in a line leading from the valve means (22) to the jet pump (6) and has a release position, in which the compressed air is admitted, essentially unimpeded, and a throttle position, in which resistance is opposed to the compressed-air throughflow by a narrowed cross section.

8. Vacuum system according to one of Claims 5 and 6, **characterized in that** the throttle means (18) is controlled by a pilot-control pressure in such a way that the throttle means (18) switches from its admission position into its throttle position when the pilot-control pressure lapses.

9. Vacuum system according to Claim 5, **characterized**
**in that** the 5/3-way valve has a valve housing (38), to the pilot-control connections (71, 72) of which pilot-control valves (31, 32) are fastened, if appropriate via intermediate pieces (77),
**in that** the throttle means (18) is arranged in an intermediate plate (57) which is arranged between the valve housing (37) and a connection plate (58) and which has a control connection (76) for the throttle means (18), and
**in that** the pilot-control connection (71), during the pressure loading of which the 5/3-way valve is transferred into the suction position, is connected to the control connection (76) of the throttle means (18).

10. Transfer system with a vacuum system according to one or more of Claims 1 to 9.

## Revendications

1. Système à dépression (1), notamment pour preneur à dépression d'un système de transfert utilisé comme moyen de retenue, comprenant
un dispositif de pompe (6) qui, lorsqu'il est chargé par de l'air comprimé au niveau d'un raccord de fluide moteur (7), produit au niveau d'un raccord d'aspiration (5) un effet d'aspiration qui est fonction de la charge d'air comprimé,
au moins un moyen de retenue (2) actionné par la dépression, qui est relié au raccord d'aspiration (5) du dispositif de pompe (6), et
un dispositif d'alimentation (12) qui est raccordé au raccord de fluide moteur (7) du dispositif de pompe (6) et au moyen duquel le dispositif de pompe (6) peut être chargé avec de l'air comprimé,
dans lequel le dispositif d'alimentation (12) contient un organe formant soupape (22) par lequel l'air comprimé qui doit être envoyé au dispositif de pompe (6) peut être libéré ou arrêté de façon commandée,
**caractérisé en ce que** le dispositif d'alimentation (12) comprend un moyen d'étranglement (18) pouvant être commandé, intercalé en amont du raccord de fluide moteur (7) du dispositif de pompe (6), pour commuter l'effet d'aspiration du dispositif de pompe (6) entre au moins deux niveaux d'aspiration différents,
l'effet d'étranglement du moyen d'étranglement (18) pouvant être commuté de façon commandée au moins entre deux niveaux prédéterminés par le fait que, dans une position d'étranglement, une résistance est opposée à l'écoulement de l'air comprimé par une section d'écoulement rétrécie, et
**en ce que** le moyen d'étranglement (18) est commandé par la dépression produite par le dispositif de pompe (6) de telle manière que le moyen d'étranglement (18) présente un plus grand effet d'étranglement lorsqu'on passe au-dessous d'une valeur de pression déterminée au niveau du moyen de retenue (2) et que le moyen d'étranglement (18) présente un plus faible effet d'étranglement lorsqu'on passe au-dessus d'une valeur de pression déterminée au niveau du moyen de retenue (2).

2. Système à dépression selon la revendication 1, **caractérisé en ce que** le dispositif d'alimentation (12) comprend un organe formant soupape (22) par lequel l'air comprimé à envoyer au dispositif de pompe (6) peut être libéré et arrêté de façon commandée.

3. Système à dépression selon la revendication 1, **caractérisé en ce que** le dispositif d'alimentation (12) comprend un organe formant soupape (22) par lequel le moyen de retenue (2) actionné par dépression peut être chargé avec de l'air comprimé de façon commandée.

4. Système à dépression selon la revendication 2 ou 3, **caractérisé en ce que** l'organe formant soupape (22) comporte au moins une première position de commande dans laquelle l'air comprimé est libéré vers le dispositif de pompe (6), une deuxième position de commande dans laquelle l'air comprimé est arrêté vers le dispositif de pompe (6) et une troisième position de commande dans laquelle le dispositif de pompe (6) est commuté sur l'état inactif.

5. Système à dépression selon la revendication 2 ou 3, **caractérisé en ce que**
l'organe formant soupape (22) est un distributeur 5/3 dont l'élément de commande (38), qui peut être placé dans trois positions de commande différentes, est précontraint élastiquement vers sa position d'arrêt dans laquelle l'envoi de l'air comprimé au dispositif de pompe (6) est arrêté, et
**en ce que** le distributeur 5/3 comporte deux entrées de pilotage en réponse à une charge de pression alternative par lesquelles l'organe de commande (38) peut être transféré de sa position d'arrêt dans l'une des deux autres positions de commande, qui sont la position d'aspiration, avec charge de pression du dispositif de pompe (6), et une position de rejet dans laquelle le dispositif de pompe (6) est inactif et le moyen de retenue (2) est chargé par une pression.

6. Système à dépression selon la revendication 5, **caractérisé en ce que** le distributeur 5/3 comprend un moyen de verrouillage (44, 46) qui verrouille l'organe de commande (38) dans la position de commande dans laquelle le dispositif de pompe (6) est alimenté en air comprimé, même en cas de défaillance de la pression de pilotage correspondante.

7. Système à dépression selon la revendication 2 ou 3, **caractérisé en ce que** le moyen d'étranglement (18) est disposé dans une conduite qui mène de l'organe formant soupape (22) à l'injecteur (6) et comporte une position de libération dans laquelle l'air comprimé peut passer sensiblement librement, ainsi qu'une position d'étranglement dans laquelle une résistance est opposée au passage de l'air comprimé par une section d'écoulement rétrécie.

8. Système à dépression selon l'une des revendications 5 ou 6, **caractérisé en ce que** le moyen d'étranglement (18) est commandé par une pression de pilotage de telle manière que le moyen d'étranglement (18) commute de sa position de passage libre à sa position d'étranglement lorsque la pression de pilotage est défaillante.

9. Système à dépression selon la revendication 5, **caractérisé**
**en ce que** le distributeur 5/3 comporte un corps de distributeur (37) aux raccords de pilotage (71, 72) duquel sont fixées des soupapes pilotes (31, 32), éventuellement par l'intermédiaire de pièces intermédiaires (77),
**en ce que** le moyen d'étranglement (18) est disposé dans une plaque intermédiaire (57) qui est disposée entre le corps de distributeur (37) et une plaque de raccordement (58) et qui comporte un raccord de commande (76) pour le moyen d'étranglement (18), et
**en ce que** le raccord de pilotage (71) est relié au raccord de commande (76) du moyen d'étranglement (18) en réponse à une charge de pression par laquelle le distributeur 5/3 est placé dans une position d'aspiration.

10. Système de transfert équipé d'un système à dépression selon l'une ou plusieurs des revendications 1 à 12.
